# EUROPÄISCHE PATENTSCHRIFT

(11) **EP 3 386 854 B1**
(45) Veröffentlichungstag und Bekanntmachung des Hinweises auf die Patenterteilung: **27.05.2020**
(21) Anmeldenummer: 16809685.7
(22) Anmeldetag: 02.12.2016
(51) Int. Cl.: B64C 27/02, B64C 27/467

(54) **TRAGSCHRAUBERROTORBLATT**
GIROPLANE ROTOR BLADE
PALE D'HELICE DE GIRAVION

(30) Priorität: 10.12.2015 DE 102015121502
(43) Veröffentlichungstag der Anmeldung: 17.10.2018
(73) Patentinhaber: Fraundorfer, Christoph, 85128 Nassenfels (DE)
(72) Erfinder: ZÖBISCH, Andre, 86666 Burgheim (DE); FRAUNDORFER, Christoph, 85128 Nassenfels (DE)
(74) Vertreter: Bergmeier, Ulrich
(86) Internationale Anmeldenummer: PCT/EP2016/079520
(87) Internationale Veröffentlichungsnummer: WO 2017/097669

(56) Entgegenhaltungen:
- DE-A1- 2 426 689
- FR-A- 1 369 600
- GB-A- 452 366
- US-A1- 2002 154 996
- US-B1- 6 497 385

## Beschreibung

Die vorliegende Erfindung betrifft ein Tragschrauberrotorblatt zur autorotatorischen Auftriebserzeugung. Das Tragschrauberrotorblatt umfasst einen wurzelseitigen Innenprofilbereich, der ein erstes Profil aufweist. Außerdem umfasst das Tragschrauberrotorblatt einen Hauptprofilbereich, der ein zum ersten Profil unterschiedliches zweites Profil aufweist. Ferner umfasst das Tragschrauberrotorblatt einen sich in Längsrichtung des Tragschrauberrotorblatts vom Bereich der Blattwurzel ausgehend in Richtung der Blattspitze monoton abnehmenden Profiltiefenverlauf.

Der Rotor des Tragschraubers wird anders als bei einem Hubschrauber nicht angetrieben, sondern wird mittels eines Fahrtwindes in Drehung versetzt und wird als Autorotation bezeichnet. Um den Fahrtwind zu erzeugen, weist der Tragschrauber einen, mittels eines Motors angetriebenen, Propeller auf, der eine Vorwärtsfahrt erzeugt und durch die Bewegung des Tragschraubers durch die umgebende Luft der Fahrtwind ausbildet wird. Da der Tragschrauberrotor nicht angetrieben ist, entfällt die Notwendigkeit eines drehmomentausgleichenden Heckrotors, wie bei dem Hubschrauber. Außerdem weist der Tragschrauber durch den in Autorotation befindlichen Tragschrauberrotor eine hohe Ausfallsicherheit auf, so dass sich bei einem Ausfall des Propellers der Tragschrauberrotor immer noch in Autorotation befindet, und eine Landung beispielsweise der Landung eines Segelflugzeugs ähnelt und relativ sicher ist.

Um die Autorotation zu erzeugen, entziehen die Tragschrauberrotorblätter des Tragschrauberrotors einer Luftmenge, die von unten nach oben durch die vom Tragschrauberrotor überstrichene Fläche strömt, Energie und wandelt diese in (Auto)Rotation und Auftrieb um. Dabei ist zu beachten, dass ein innerer Bereich, der zur Drehachse des Tragschrauberrotors benachbart ist, des Tragschrauberrotorblatts für die Autorotation antreibend wirkt, das Tragschrauberrotorblatt also beschleunigt. Ein äußerer Bereich des Tragschrauberrotorblatts, der von der Drehachse entfernt liegt, wirkt für die Autorotation bremsend. Dieser äußere Bereich erzeugt durch die höhere Umlaufgeschwindigkeit des Tragschrauberrotorblatts jedoch auch den größten Auftrieb. Bei der Bewegung des Tragschrauberrotorblatts wird auch ein Luftwiderstand induziert, der abhängig von der Geschwindigkeit des Tragschrauberrotorblatts durch die umgebende Luft (effektive Anströmgeschwindigkeit) und von der Form des Tragschrauberrotorblatts ist. Höhere Strömungsgeschwindigkeiten führen zu einem höheren Luftwiderstand. Der Luftwiderstand ist auch abhängig vom Auftrieb. Desto mehr Auftrieb ein Bereich des Tragschrauberrotorblatts erzeugt, desto größer ist auch der Luftwiderstand. Somit steigt insgesamt der Luftwiderstand in Richtung der Blattspitze des Tragschrauberrotorblatts stark an.

Aus der GB 452 366 A ist ein Rotorblatt gemäß dem Oberbegriff des Anspruchs 1 für einen Tragschrauber bekannt.

Darin wird ein Rotorblatt mit einem im Wesentlichen rechteckigen Grundriss offenbart. Dabei kann sich über die Länge des Rotorblattes ein Querschnittsprofil ändern. Nachteilig an einem derartigen Rotorblatt ist, dass dieses einen hohen Luftwiderstand aufweist.

In der US 2002/0154996 A1 ist ein Rotorblatt für ein Kipprotorflugzeug beschrieben.

In der FR 1 369 600 A ist ein Rotorblatt für einen Helikopter beschrieben.

In der US 6,497,385 B1 ist ein Rotorblatt für einen Helikopter oder ein Kipprotorflugzeug beschrieben.

Aufgabe der vorliegenden Erfindung ist es somit, ein Tragschrauberrotorblatt zu schaffen, das einen geringen Luftwiderstand aufweist.

Die Aufgabe wird gelöst durch ein Tragschrauberrotorblatt für einen Tragschrauber mit den Merkmalen des unabhängigen Patentanspruchs 1.

Vorgeschlagen wird ein Tragschrauberrotorblatt zur autorotatorischen Auftriebserzeugung mit einem Innenprofilbereich und einem Hauptprofilbereich. Ferner weist das Tragschrauberrotorblatt vorzugsweise einen sich radial nach außen verjüngenden Grundriss auf. Ein Querschnitt, insbesondere im 90° Winkel zur Längsrichtung, durch das Tragschrauberrotorblatt wird als Profil des Tragschrauberrotorblatts bezeichnet. Eine Aneinanderreihung der einzelnen Profile entlang einer definierten Linie und/oder Kurve von der Blattwurzel bis zur Blattspitze wird als Profilstrak bezeichnet.

Außerdem weist das Tragschrauberrotorblatt eine Vorderkante, die bei autorotierendem Tragschrauberrotor vorweg läuft, und eine Hinterkante, die bei autorotierendem Tragschrauberrotor hinterher läuft, auf. Die Vorderkante und die Hinterkante begrenzen einen Grundriss des Tragschrauberrotorblatts. Ein Abstand zwischen der Vorderkante und der Hinterkante, insbesondere im 90° Winkel zur Längsrichtung, wird als Profiltiefe bezeichnet.

Ferner umfasst das Tragschrauberrotorblatt eine Unterdruckseite, an der bei einem normalen Flugzustand des Tragschraubers ein Unterdruck ausgebildet ist, und eine Überdruckseite, an der bei dem normalen Flugzustand des Tragschraubers ein Überdruck ausgebildet ist. Die Unterdruckseite kann dabei als eine konvexe Fläche des Tragschrauberrotorblatts und die Überdruckseite als eine im Wesentlichen ebene Fläche ausgebildet sein. Insbesondere ist jedoch die Verdrängungswirkung der anströmenden Luft durch ein Profil des Tragschrauberrotorblatts derart ausgeführt, dass bei einer Luftströmung um das Tragschrauberrotorblatt die Strömung auf der Oberseite des Tragschrauberrotorblatts, nämlich der Unterdruckseite, im Mittel mehr beschleunigt wird, als auf der Unterseite des Tragschrauberrotorblatts, nämlich der Überdruckseite. Gemäß dem Bernoulli-Gesetzt stellt sich eine Druckverteilung ein, die der lokalen Strömungsgeschwindigkeit entspricht, wobei die entstehende Druckdifferenz zwischen Ober- und Unterseite den Auftrieb des Tragschrauberrotorblattes bewirkt. Dies führt zu dem Auftrieb des ganzen Tragschrauberrotors und somit des Tragschraubers. Die eben erwähnte Druckverteilung ist dabei abhängig von dem jeweiligen Profil des Tragschrauberrotorblatts. Ändert sich beispielsweise das Profil derart, dass die lokale Geschwindigkeit der Luftströmung über der Unterdruckseite größer wird, kann beispielsweise der Auftrieb erhöht werden. Die aerodynamischen Eigenschaften des Tragschrauberrotorblatts, insbesondere dessen Flugleistung, sind somit vom Profil des Tragschrauberrotorblatts abhängig.

Das Tragschrauberrotorblatt umfasst zudem einen wurzelseitigen Innenprofilbereich, der ein erstes Profil aufweist. Dieses erste Profil kann sich beispielsweise auch über die komplette Länge des Innenprofilbereiches erstrecken. Außerdem umfasst das Tragschrauberrotorblatt einen spitzenseitigen Hauptprofilbereich, der ein zum ersten Profil unterschiedliches zweites Profil aufweist. Dieses zweite Profil kann sich beispielsweise auch über die komplette Länge des Hauptprofilbereiches erstrecken. Mittels zumindest zweier unterschiedlicher Profile des Tragschrauberrotorblatts kann auf unterschiedliche Strömungen an das Tragschrauberrotorblatt eingegangen werden.

Daneben weist das Tragschrauberrotorblatt an der Blattwurzel und/oder dazu benachbart einen Innenprofilbereich, an der Blattspitze und/oder dazu benachbart einen Außenprofilbereich und/oder zwischen Blattwurzel und Blattspitze einen Hauptprofilbereich auf. Somit sind von der Blattwurzel bis zur Blattspitze der Innenprofil-, der Hauptprofil- und der Außenprofilbereich der Reihe nach angeordnet. Dabei weisen der Innenprofil-, der Außenprofil-, und/oder der Hauptprofilbereich jeweils ein, insbesondere ein anderes, Profil auf. Auch steigt wie bereits beschrieben die Strömungsgeschwindigkeit der umgebenden Luft um einen Bereich des Tragschrauberrotorblatts. Durch die drei Bereiche kann auf die entlang des Tragschrauberrotorblatts unterschiedlichen Strömungsgeschwindigkeiten eingegangen werden.

Des Weiteren weist das Tragschrauberrotorblatt einen sich in Längsrichtung des Tragschrauberrotorblatts vom Bereich der Blattwurzel ausgehend in Richtung der Blattspitze monoton abnehmenden Profiltiefenverlauf auf. Dabei nimmt der Profiltiefenverlauf erst ab einer maximalen Profiltiefe ab. Ein Bereich zwischen dem Ende des Tragschrauberrotorblatts an der Blattwurzel bis zu der Stelle der maximalen Profiltiefe weist lediglich Befestigungsmittel auf, mit denen das Tragschrauberrotorblatt an einem Tragschrauberrotorkopf angebracht wird und hat damit keine nennenswerte Auswirkungen auf die Flugleistung.

Der Profiltiefenverlauf ist dabei die Profiltiefe in Abhängigkeit von der Längsrichtung des Tragschrauberrotorblatts vom Bereich der Blattwurzel in Richtung der Blattspitze. Der Profiltiefenverlauf kann daher beispielsweise als Graph, Funktion, Abbildung oder Relation in einem kartesischen Koordinatensystem dargestellt werden. Auf der x-Achse ist dabei die Längsrichtung von der Blattwurzel zur Blattspitze aufgetragen. Beispielsweise kann x=0 im Bereich der Blattwurzel, insbesondere bei der maximalen Profiltiefe des Tragschrauberrotorblatts, gewählt werden. Die Längsrichtung des Tragschrauberrotorblatts wird dann in Richtung positiver x-Werte aufgetragen. Die Profiltiefen können z.B. als y-Werte aufgetragen werden. Der Profiltiefenverlauf ist dann die Funktion der Profiltiefe in Abhängigkeit der x-Werte bzw. der Längsrichtung. Der Profiltiefenverlauf ist somit ein Graph bzw. ein Diagramm in dem kartesischen Koordinatensystem, so dass die Profiltiefe des Tragschrauberrotorblatts an beliebigen Stellen, beispielsweise an bestimmten Abständen von der Blattwurzel in Richtung der Blattspitze, abgelesen werden kann.

Ein monoton abnehmender Profiltiefenverlauf beschreibt somit ein Tragschrauberrotorblatt, dessen Profiltiefe von der Blattwurzel, insbesondere von einer maximalen Profiltiefe, in Richtung der Blattspitze monoton kleiner wird.

Die Profiltiefe kann dabei von der Blattwurzel bis zur Blattspitze linear, parabolisch und/oder exponentiell abnehmen. Zusätzlich oder alternativ kann auch insbesondere die Hinterkante eine konvexe und/oder konkave Form zum Tragschrauberrotorblatt aufweisen.

Da das Tragschrauberrotorblatt um eine Drehachse des Tragschrauberrotors rotiert, weist das Tragschrauberrotorblatt in Abhängigkeit des Radius unterschiedliche Rotationsgeschwindigkeiten auf. Eine Strömungsgeschwindigkeit der umgebenden Luft um einen Bereich des Tragschrauberrotorblatts ist eine Überlagerung aus Fahrtwind und der Rotationsgeschwindigkeit des Bereichs des Tragschrauberrotorblatts. Es steigt somit die Strömungsgeschwindigkeit der anströmenden Luft an das Tragschrauberrotorblatt mit dem Radius. Die Strömungsgeschwindigkeit ist dabei an einer Blattwurzel am geringsten und an einer Blattspitze am höchsten. Zudem ergeben sich aus der Überlagerung von Fahrtwind und Rotationsgeschwindigkeit entlang des Tragschrauberrotorblattes unterschiedliche Anströmwinkel unter denen das Tragschrauberrotorblatt angeströmt wird.

Bei einem unverwundenen Tragschrauberrotorblatt mit konstantem Profiltiefenverlauf (Rechteckblatt) ist dieses nicht an die lokal unterschiedliche Anströmung angepasst. Dabei bewirkt die Umströmung des Tragschrauberrotorblatts an jeder Position einen Abwind entsprechend der lokalen Strömungsbedingungen. Für das gesamte Tragschrauberrotorblatt bzw. den gesamten Tragschrauberrotor stellt sich somit ein entsprechendes Abwindfeld ein. Bei unverwundenen Rechteckblättern fällt dieses induzierte Abwindfeld ungünstig aus, wodurch die Drehfreudigkeit des Tragschrauberrotors vermindert wird und einen entsprechenden Luftwiderstand des Tragschrauberrotors nach sich zieht.

Wenn die Profiltiefe dabei in Richtung der Blattspitze abnimmt, führt dies mit der lokalen Anströmung am Rotorblatt zu einer vorteilhafteren Abwindverteilung, die eine gesteigerte Drehfreudigkeit des Tragschrauberrotors bewirkt und dementsprechend den Luftwiderstand des gesamten Tragschrauberrotors reduziert. Durch die sich in Richtung der Blattspitze monoton abnehmenden Profiltiefe kommt es zu einer anders gearteten Verteilung der Auftriebskräfte am Tragschrauberrotorblatt. Dabei ist der Profiltiefenverlauf derart ausgebildet, dass der erfindungsgemäße Grundriss des Tragschrauberrotorblatts mit optimiertem Abwindfeld zusammen mit der (nach außen) steigenden Anströmgeschwindigkeit im Mittel den gleichen Auftrieb bereitstellt wie bei einem Tragschrauberrotorblatt mit einem konstanten Profiltiefenverlauf, jedoch bei geringerem Widerstand.

Dabei kann mit einem Tragschrauberrotorblatt, das einen geringeren Luftwiderstand aufweist, eine höhere Flugleistung erzielt werden. Beispielsweise kann eine Flugdauer und somit eine Reichweite des Tragschraubers verlängert werden.

Erfindungsgemäß weist das Tragschrauberrotorblatt eine Verwindung mit einem sich vom Bereich der Blattwurzel ausgehend in Richtung der Blattspitze monoton abnehmenden Verwindungsverlauf auf. Der Verwindungsverlauf kann dabei analog zum Profiltiefenverlauf beschrieben werden. Beispielsweise als eine Funktion, Diagramm, Graph der Verwindung des Tragschrauberrotorblatts in Abhängigkeit der Längsrichtung von der Blattwurzel in Richtung der Blattspitze. Der Abstand bzw. die Längsrichtung ist wieder auf der x-Achse aufgetragen, wobei der Bereich der Blattwurzel bei x=0 liegt und die Blattspitze den größten (positiven) x-Wert annimmt. Die Verwindung wird dann auf der y-Achse aufgetragen. Anhand des Graphen kann somit die Verwindung des Tragschrauberrotorblatts an verschiedenen Stellen des Tragschrauberrotorblatts abgelesen werden. Der Verwindungsverlauf gibt des Weiteren an, wie das Tragschrauberrotorblatt in sich verwunden ist. Außerdem gibt die Verwindung einen Winkel an. Die Verwindung mit einem Blatteinstellwinkel des Tragschrauberrotorblatts gibt an, wie ein Profil gegenüber einer Drehebene des rotierenden Tragschrauberrotorblatts orientiert ist.

Die Drehebene ist senkrecht zur Drehachse des Tragschrauberrotors definiert (Schlag- und Schwenkbewegungen des Tragschrauberrotorblattes werden nicht betrachtet). Besitzt das Tragschrauberrotorblatt einen Blatteinstellwinkel, so ist dieses um die Längsachse die in Spannweitenrichtung (von der Blattwurzel zur Blattspitze) verläuft um einen Winkel gedreht. Der Blatteinstellwinkel ist der Winkel zwischen einer rotorblattfesten, definierten Referenzebene und der Drehebene.

Die Verwindung selbst gibt an, um welchen Winkel der lokale Profilschnitt gegenüber einer Referenzebene verwunden ist. Der Blatteinstellwinkel bildet mit der Verwindung den lokalen geometrischen Anstellwinkel. Dieser ist aufgrund der Verwindung lokal unterschiedlich und folglich als Winkel zwischen Profilsehne und Drehebene definiert. Die Profilsehne ist die Verbindungslinie zwischen den am weitesten auseinanderliegenden Punkten von Vorderkante und Hinterkante des Profils.

Der Verwindungswinkel eines Profils ist bei einem Blatteinstellwinkel von Null Grad derjenige Winkel, den ein Profil mit der Drehebene des rotierenden Tragschrauberrotorblatts bildet. Dieser Verwindungswinkel ist beispielsweise Null Grad (für ein betrachtetes Profil) wenn das Profil parallel zur der Drehebene ausgerichtet ist (bei einem Blatteinstellwinkel von Null Grad).

Ferner weist das Tragschrauberrotorblatt in Längsrichtung eine Verwindung auf, so dass das Tragschrauberrotorblatt um eine Achse in Längsrichtung verdreht ist. Wenn die einzelnen Profile in einem Profilstrak mit einem jeweils unterschiedlichen Winkel aufgereiht werden, wird die Verwindung ausgebildet. Mittels der Verwindung kann ein Anströmverhalten an das Tragschrauberrotorblatt verändert werden. Somit kann eine vorteilhaftere Abwindverteilung erreicht werden, so dass eine Leistung des Tragschrauberrotorblatts bei gleichbleibendem Luftwiderstand erhöht wird. Die Verwindung führt dazu, dass der geometrische Anstellwinkel der einzelnen Profile gegenüber einer Umlaufebene der Tragschrauberrotorblätter (Drehebene) des Tragschrauberrotors über die Längsrichtung des Tragschrauberrotorblatts unterschiedlich ist. Ist beispielsweise der Verwindungswinkel gering, ist das dazugehörige Profil im Wesentlichen parallel zum Blatteinstellwinkel, bzw. bei einem Blatteinstellwinkel von Null Grad im Wesentlichen parallel zur Umlaufebene der Tragschrauberrotorblätter.

Ähnlich der Tiefenverteilung nimmt auch die Verwindung wesentlichen Einfluss auf die lokalen Strömungsbedingungen, welche wiederrum Einfluss auf den lokalen Abwind hat und somit zum gesamten Abwindfeld beiträgt/ das gesamte Abwindfeld wesentlich mitbestimmt.

Eine der Erfindung entsprechende Verwindung resultiert in einem günstigeren Abwindfeld, wodurch die Drehfreudigkeit des Rotors weiter gesteigert und der Luftwiderstand des gesamten Tragschrauberrotors weiter reduziert wird. Dabei ist die Verwindung derart gestaltet, dass diese nicht nur eine Verbesserung des Abwindfeldes nach sich zieht, vielmehr ist das sich einstellende Abwindfeld derart ausgebildet/ geprägt, dass das Tragschrauberrotorblatt entsprechend der lokal verwendeten Profile optimal angeströmt wird, wodurch die Blattprofile die Drehfreudigkeit des Rotors nochmals erhöhen und somit einen weiteren Beitrag zur Reduzierung des gesamten Luftwiderstandes des Tragschrauberrotors leisten können.

Von Vorteil ist es auch, wenn die Verwindung in Längsrichtung von der Blattwurzel bis zur Blattspitze derart ausgebildet ist, dass die Hinterkante in Richtung Unterdruckseite und die Vorderkante in Richtung Überdruckseite verdreht ist. Bei einem normalen Flugbetrieb weist das Tragschrauberrotorblatt einen Blatteinstellwinkel auf, d.h. die Vorderkante ist höher angeordnet als die Hinterkante, so dass die Profilsehne (die Verbindungslinie zwischen Vorderkante und Hinterkante) den geometrischen Anstellwinkel aufweist. Das heißt, das Tragschrauberrotorblatt ist gegenüber der Umlaufebene nach oben geneigt.

Da die Strömungsgeschwindigkeit im Wurzelbereich geringer ist als im Spitzenbereich, ist es vorteilhaft wenn durch die Verwindung im Wurzelbereich der Einstellwinkel der Profile vergrößert und im Spitzenbereich bzw. zum Spitzenbereich hin verkleinert wird. Dies verbessert die Abwindverteilung, wodurch der Luftwiderstand des Tragschrauberrotors vermindert wird. Die Leistung des Tragschrauberrotorblatts wird dadurch erhöht.

Ferner weist der Verwindungsverlauf im Innenprofilbereich und/oder im Hauptprofilbereich eine variable Steigung auf. Dabei kann der Verwindungsverlauf in diesem Bereich konkav gekrümmt sein. Der Verwindungsverlauf ändert sich somit über die Länge des Tragschrauberrotorblatts, was vorteilhaft für die Flugleistung des Tragschrauberrotorblatts ist. Da bei einem Flug des Tragschraubers das Tragschrauberrotorblatt entlang dessen Länge unterschiedlich angeströmt wird, ist es vorteilhaft, wenn auch die Verwindung an diese verschiedenen Luftströmungen angepasst ist. Wenn der Verwindungsverlauf konkav gekrümmt sowie monoton abnehmend ausgebildet ist, nähert sich der Verwindungsverlauf der x-Achse an, d.h. der Verwindungswinkel nähert sich in Richtung der Blattspitze Null Grad. Ein Profil an der Blattspitze ist somit parallel zur Drehebene des rotierenden Tragschrauberrotorblatts (bei einem Blatteinstellwinkel von Null Grad). Damit wird die Flugleistung des Tragschrauberrotorblatts verbessert, da Verwirbelungen in Richtung der Blattspitze vermindert werden. Mit einer besonderen Form, Profil, Verwindung und/oder Grundriss, kann das Tragschrauberrotorblatt auf spezielle Anforderungen des Tragschraubers angepasst werden. Soll beispielsweise die Reichweite des Tragschraubers erhöht werden (bei gleichbleibender Tankfüllung, etc.) oder eine höhere Nutzlast transportiert werden, kann der erfindungsgemäße Profiltiefenverlauf mit einem Faktor skaliert werden, der z.B. die Profiltiefe verringert oder vergrößert. Beispielsweise könnte der Faktor 0,8 sein, so dass die Profiltiefe um diesen Faktor verringert wird. Das Tragschrauberrotorblatt ist somit insgesamt schmaler ausgebildet. Alternativ könnte der Faktor aber auch 1,2 betragen, so dass die Profiltiefe um diesen Faktor vergrößert wird. Das Tragschrauberrotorblatt wird somit um diesen Faktor breiter. Der Faktor könnte auch in einem Bereich zwischen 0,8 und 1,2 liegen. Der Faktor könnte auch über die Länge des Tragschrauberrotorblatts variabel sein. So könnten beispielsweise der Innenprofilbereich und der Hauptprofilbereich einen unterschiedlichen Faktor aufweisen. Damit kann der Profiltiefenverlauf ideal an die Entwurfsziele angepasst werden. Ferner kann der Profiltiefenverlauf optimal an verschiedene Rotordurchmesser angepasst werden. Wenn beispielsweise der Grundriss des Tragschrauberrotorblatts eine größere Fläche aufweist, ist der Auftrieb erhöht, so dass das Tragschrauberrotorblatt höhere Lasten tragen kann. Dabei bildet der erfindungsgemäße Grundriss stets die Grundlage für ein optimiertes Abwindfeld, was schlussendlich eine Widerstandsreduzierung des Tragschrauberrotors zur Folge hat. All dies erhöht die Flugleistung des Tragschrauberrotorblatts, was mit dem erfindungsgemäßen Tragschrauberrotorblatt erzielt wird.

Ebenso ist es von Vorteil, wenn sich der Hauptprofilbereich im Vergleich zum Innenprofilbereich über eine größere Länge erstreckt. Da im Hauptprofilbereich die Rotationsgeschwindigkeit des Tragschrauberrotorblatts höher ist als im Innenprofilbereich, hat der Hauptprofilbereich größere Auswirkungen auf die Flugleistung des Tragschrauberrotorblatts. Eine Anpassung eines größeren Hauptprofilbereichs kann dabei effektiver gestaltet werden.

Zwischen dem Innenprofilbereich und dem Hauptprofilbereich ist ein Übergangsprofilbereich angeordnet. Der Übergangsprofilbereich weist ein drittes Profil auf. Die Profilgeometrie des Übergangprofilbereichs verändert sich dabei kontinuierlich und/oder fließend radial nach außen vom ersten Profil zum zweiten Profil. Damit kann beispielsweise ein kontinuierlicher und/oder fließender Übergang von einem sich unterscheidenden ersten und zweiten Profil ausgebildet werden. Damit können Unstetigkeitsstellen, beispielsweise Kanten und/oder Absätze, zwischen dem ersten und zweiten Profil vermieden werden was einen stetigen Übergang der aerodynamischen Eigenschaften ermöglicht und somit die Flugleistung des Tragschrauberrotorblatts erhöht. Zusätzlich könnte zwischen dem Innenprofilbereich und dem Hauptprofilbereich auch mehr als ein Übergangsprofilbereich angeordnet sein. Diese mehreren Übergangsprofilbereiche könnten auch jeweils ein Profil aufweisen, wobei zumindest zwei Profile verschieden sind.

Zusätzlich oder alternativ kann auch zwischen dem Hauptprofilbereich und dem Außenprofilbereich ein zweiter Übergangsprofilbereich angeordnet sein. Damit kann besser auf die Strömungsverhältnisse der Luft um das Tragschrauberrotorblatt eingegangen werden. Zusätzlich könnte zwischen dem Hauptprofilbereich und dem Außenprofilbereich auch mehr als ein zweiter Übergangsprofilbereich angeordnet sein. Diese mehreren Übergangsprofilbereiche könnten auch jeweils ein Profil aufweisen, wobei zumindest zwei Profile verschieden sind.

Außerdem ist es von Vorteil, wenn im Bereich der Hinterkante eine Nase angeordnet ist, so dass das Tragschrauberrotorblatt in Richtung der Unterdruckseite gekrümmt ist und/oder dass im Bereich der Nase die Unterdruck- und die Überdruckseite im Wesentlichen parallel sind. Mit der Nase, die insbesondere in Richtung der Unterdruckseite gekrümmt ist, kann die sich von dem Tragschrauberrotorblatt ablösende Luftströmung hinter der Hinterkante des Tragschrauberrotorblatts besser geführt werden, wodurch Torsionslasten reduziert werden können.

Der Verwindungsverlauf im Übergangsprofilbereich weist eine konstante Steigung auf, so dass der Verwindungsverlauf, insbesondere über den gesamten Übergangsprofilbereich, geradlinig ist. Dies ermöglicht einen stetigen Übergang der aerodynamischen Eigenschaften.

Ebenso ist es vorteilhaft, wenn die Verwindung, insbesondere der Verwindungswinkel, im ersten und/oder im zweiten Übergangsprofilbereich in Längsrichtung konstant ist. Dies vereinfacht die Konstruktion des Tragschrauberrotorblatts. Zusätzlich oder alternativ kann die Verwindung im ersten und/oder im zweiten Übergangsprofilbereich größer als im Innen- und/oder im Hauptprofilbereich sein. Damit kann beispielsweise über eine kurze Strecke in Längsrichtung des Tragschrauberrotorblatts eine Verwindung zwischen den Profilbereichen ausgeglichen bzw. aneinander angepasst werden.

Vorteilhaft ist es auch, wenn die Steigung und/oder die Gesamtverwindung des Übergangsprofilbereichs mindestens halb so groß ist als die maximale Steigung und/oder Gesamtverwindung des Innenprofilbereichs und/oder Hauptprofilbereichs. Dadurch können das erste und das zweite Profil über eine geringere Länge des Tragschrauberrotorblatts aneinander angepasst werden.

Die Verwindung kann sich dabei linear von der Blattwurzel zur Blattspitze auf die oben beschriebene Weise verändern, was vorteilhaft ist, da auch die Strömungsgeschwindigkeit der Luft um das Tragschrauberrotorblatt linear mit dem Radius nach außen hin zunimmt. Die Verwindung könnte von der Blattwurzel bis zur Blattspitze auch einen parabolischen, exponentiellen, polynomialen und/oder logarithmischen Verlauf aufweisen. Außerdem kann die Verwindung in jedem Bereich, insbesondere den Übergangsprofilbereichen, dem Innenprofil-, dem Hauptprofil- und/oder dem Außenprofilbereich, unterschiedlich sein. Ebenso könnte zumindest einer der genannten Bereiche keine Verwindung aufweisen. Dadurch kann die Verwindung optimal an die Strömungsverhältnisse in diesen Bereichen angepasst werden.

Wenn die Verwindung im Innenprofil-, im Hauptprofil- und/oder im Außenprofilbereich variabel ausgebildet ist, bringt dies ebenfalls Vorteile mit sich. Somit kann besonders vorteilhaft auf die Strömungsverhältnisse, insbesondere auf die mit dem Radius steigende Strömungsgeschwindigkeit, eingegangen werden, was den Luftwiderstand verringert und somit die Flugleistung erhöht.

Daneben ist es von Vorteil, wenn das Tragschrauberrotorblatt im Bereich der Blattspitze, insbesondere des Außenprofilbereichs, vorzugsweise nur geringe Verwindungswinkel aufweist. Mittels des Außenprofilbereichs kann das Tragschrauberrotorblatt besser an die Strömungsverhältnisse angepasst werden. Wenn der Verwindungswinkel beispielsweise konstant ist, ist das Tragschrauberrotorblatt in dem Außenprofilbereich nicht verwunden, was zu einer einfacheren Herstellung des Tragschrauberrotorblatts führt.

Ferner ist es von Vorteil, wenn der Verwindungsverlauf im gesamten Innenprofilbereich und/oder im Übergangsbereich bzw. in den Übergangsbereichen einen positiven Verwindungswinkel aufweist. Wie oben beschrieben, gibt der Verwindungswinkel an, um wieviel Grad der lokale Profilschnitt gegenüber einer definierten Referenzebene verwunden ist. Der Verwindungswinkel eines Profils ist bei einem Blatteinstellwinkel von Null Grad derjenige Winkel, den ein Profil mit der Drehebene des rotierenden Tragschrauberrotorblatts bildet. Bei einem positiven Verwindungswinkel ist das Tragschrauberrotorblatt nach oben gekippt, was bedeutet, dass die Vorderkante des Tragschrauberrotorblatts einen größeren Abstand zur Drehebene aufweist, als die Hinterkante.

Zusätzlich ist es von Vorteil, wenn der Verwindungsverlauf in einem wurzelseitigen ersten Teilbereich des Hauptprofilbereichs einen positiven Verwindungswinkel und in einem spitzenseitigen zweiten Teilbereich des Hauptprofilbereichs einen negativen Verwindungswinkel aufweist. Zusätzlich oder alternativ beträgt der Verwindungswinkel zwischen dem ersten und dem zweiten Teilbereich Null. Beispielsweise liegt in diesem Bereich das Profil bei einem Blatteinstellwinkel von Null parallel zur Drehebene. All dies erhöht die Flugleistung des Tragschrauberrotorblatts.

Außerdem ist es von Vorteil, wenn der Verwindungsverlauf beim Übergang vom Innenprofilbereich zum Übergangsprofilbereich einen ersten Knick aufweist. Zusätzlich oder alternativ ist es von Vorteil, wenn der Verwindungsverlauf beim Übergang vom Übergangsprofilbereich zum Hauptprofilbereich einen zweiten Knick aufweist. Dabei kann der erste und/oder der zweite Knick beispielsweise negativ und/oder konvex ausgebildet sein.

Außerdem ist es vorteilhaft, wenn der Profiltiefenverlauf als eine geschwungene Kurve, beispielsweise im Übergangsprofilbereich und/oder im Hauptprofilbereich, ausgebildet ist. Zusätzlich oder alternativ kann der Profiltiefenverlauf als eine monoton fallende Kurve ausgebildet sein. Die monoton fallende Kurve kann auch eine streng monoton fallende Kurve sein.

Des Weiteren ist es vorteilhaft, wenn der Innenprofilbereich eine relative Profildicke, die das Verhältnis von größter Profildicke und der Profiltiefe angibt, zwischen 11% und 15%, vorzugsweise 13,5%, mit einer relativen Dickenrücklage, die das Verhältnis des Abstands der größten Profildicke von der Vorderkante und der Profiltiefe angibt, zwischen 25% und 35%, vorzugsweise bei 29,2%, aufweist. Die Profildicke ist dabei der vertikale Abstand zwischen Überdruck- und Unterdruckseite.

Ebenso ist es vorteilhaft, wenn der Hauptprofilbereich eine relative Profildicke, die das Verhältnis von größter Profildicke und der Profiltiefe angibt, zwischen 10% und 14%, vorzugsweise 12,1%, mit einer relativen Dickenrücklage, die das Verhältnis des Abstands der größten Profildicke von der Vorderkante und der Profiltiefe angibt, zwischen 26% und 36%, vorzugsweise bei 31,1%, aufweist.

Von Vorteil ist es, wenn der Innenprofilbereich eine maximale Wölbung, die das Verhältnis des größten Abstands zwischen Profilsehne zur Skelettlinie und der Profiltiefe angibt, zwischen 3% und 4%, insbesondere zwischen 3,6% und 3,8%, mit einer relativen Wölbungsrücklage, die das Verhältnis zwischen des Abstandes der maximalen Wölbung von der Vorderkante und der Profiltiefe angibt, zwischen 30% und 40%, vorzugsweise bei 35,3%, aufweist. Die Profilsehne ist dabei die Verbindungslinie von Vorderkante zur Hinterkante. Die Skelettlinie ist die Linie, die mittig zwischen der Unterdruck- und der Überdruckseite verläuft.

Von Vorteil ist es, wenn der Hauptprofilbereich eine maximale Wölbung, die das Verhältnis des größten Abstands zwischen Profilsehne zur Skelettlinie und der Profiltiefe angibt, zwischen 3% und 4%, insbesondere zwischen 3,2% und 3,4%, mit einer relativen Wölbungsrücklage, die das Verhältnis zwischen des Abstandes der maximalen Wölbung von der Vorderkante und der Profiltiefe angibt, zwischen 30% und 40%, vorzugsweise bei 36,8%, aufweist.

Außerdem ist es von Vorteil, wenn das Querschnittsprofil des Innenprofilbereichs auf 1 normierte Koordinaten gemäß der folgenden Tabelle 1 ausgebildet ist.

**Tabelle 1**

| X/c | Y/c |
|---|---|
| 0.9999143 | 0.0013778 |
| 0.9096047 | 0.0057740 |
| 0.8094283 | 0.0215009 |
| 0.7018852 | 0.0380422 |
| 0.5942588 | 0.0547910 |
| 0.5069711 | 0.0676497 |
| 0.4086232 | 0.0790094 |
| 0.3009582 | 0.0828136 |
| 0.1957930 | 0.0751251 |
| 0.1002021 | 0.0572140 |
| 0.0000021 | -0.0001393 |
| 0.0993147 | -0.0268982 |
| 0.2099724 | -0.0272236 |
| 0.2992137 | -0.0251922 |
| 0.4082850 | -0.0217272 |
| 0.4999015 | -0.0184438 |
| 0.5916794 | -0.0151009 |
| 0.7018578 | -0.0112716 |
| 0.7933965 | -0.0082416 |
| 0.9019589 | -0.0051074 |
| 1.0000250 | -0.0013522 |

Die X/c- und die Y/c-Werte sind auf die Profiltiefe (c im Divisor der Werte) normiert, der Koordinatenursprung ist bei der Vorderkante und die Werte sind in der Tabelle von oben nach unten derart angeordnet, dass von der Hinterkante ausgegangen wird, zuerst die Unterdruckseite entlang zur Vorderkante und anschließend die Überdruckseite entlang wieder zurück zur Hinterkante beschrieben ist.

Außerdem ist es von Vorteil, wenn das Querschnittsprofil des Hauptprofilbereichs auf 1 normierte Koordinaten gemäß der folgenden Tabelle 2 ausgebildet ist.

**Tabelle 2**

| X/c | Y/c |
|---|---|
| 0.9999143 | 0.0015200 |
| 0.9084306 | 0.0066846 |
| 0.7988078 | 0.0244418 |
| 0.7023305 | 0.0398598 |
| 0.6058425 | 0.0553892 |
| 0.4954016 | 0.0718163 |
| 0.4047419 | 0.0813044 |
| 0.3017767 | 0.0832083 |
| 0.1994129 | 0.0743986 |
| 0.1020109 | 0.0551867 |
| 0.0000031 | -0.0001814 |
| 0.0957733 | -0.0261818 |
| 0.2031406 | -0.0278629 |
| 0.2994944 | -0.0263669 |
| 0.3968387 | -0.0235516 |
| 0.4948608 | -0.0200729 |
| 0.6096461 | -0.0157994 |
| 0.7080685 | -0.0121285 |
| 0.8063514 | -0.0085282 |
| 0.9045046 | -0.0051214 |
| 1.0000250 | -0.0014784 |

Die X/c- und die Y/c-Werte sind auf die Profiltiefe (c im Divisor der Werte) normiert, der Koordinatenursprung ist bei der Vorderkante und die Werte sind in der Tabelle von oben nach unten derart angeordnet, dass von der Hinterkante ausgegangen wird, zuerst die Unterdruckseite entlang zur Vorderkante und anschließend die Überdruckseite entlang wieder zurück zur Hinterkante beschrieben ist.

Ferner können die Y/c-Werte der Tabelle 1 mit einem Faktor von 0,7 bis 1,1, vorzugsweise 0,8, und/oder die Y/c-Werte der Tabelle 2 mit einem Faktor von 0,7 bis 1,1, vorzugsweise 0,9, versehen sein. Die beiden Tabellen, insbesondere die Y/c-Werte, können somit mit diesen Faktoren skaliert sein.

Mittels derart ausgebildeten Profilen der Bereiche (Innen-, Haupt- und/oder Außenprofilbereich) des Tragschrauberrotorblatts, kann dieses optimal an Anforderungen an ein Flugverhalten des Tragschrauberrotors angepasst werden. Wenn beispielsweise eine höhere Fluggeschwindigkeit gefordert ist, kann z.B. die relative Profildicke geringer gewählt werden wodurch den bei höheren Fluggeschwindigkeiten auftretenden transsonischen Effekten entgegengewirkt wird, was nicht nur zu einem geringeren Luftwiderstand des Tragschrauberrotors, sondern auch zu einer entsprechenden Lärmreduzierung führt.

Weitere Vorteile der Erfindung sind in den nachfolgenden Ausführungsbeispielen beschrieben. Es zeigen:
- **Figur 1**: eine perspektivische Ansicht eines Tragschrauberrotorblatts,
- **Figur 2**: ein Diagramm eines Profiltiefenverlaufs und eines Verwindungsverlaufs eines Tragschrauberrotorblatts,
- **Figur 3**: einen Querschnitt des Profils des Innenprofilbereichs und
- **Figur 4**: einen Querschnitt des Profils des Hauptprofilbereichs.

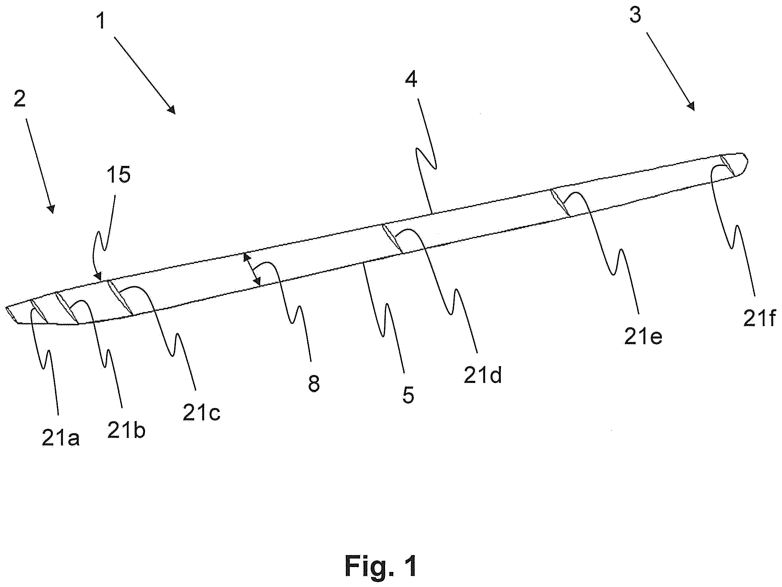

Figur 1 zeigt eine perspektivische Ansicht eines Tragschrauberrotorblatts 1. Dieses erstreckt sich entlang einer Längsrichtung von einer Blattwurzel 2 bis zu einer Blattspitze 3, welche an den jeweiligen Enden des Tragschrauberrotorblatts 1 angeordnet sind. Im Bereich der Blattwurzel 2 kann das Tragschrauberrotorblatt 1 an einem Rotorkopf eines Tragschraubers befestigt werden. Das Tragschrauberrotorblatt 1 rotiert somit bei einem Flugbetrieb des Tragschraubers um den Rotorkopf, wobei die Blattwurzel 2 bei der Rotation innen und die Blattspitze 3 außen liegt. Die Blattspitze 3 weist deshalb eine höhere Umfangsgeschwindigkeit auf als beispielsweise ein Bereich weiter innen in Richtung der Blattwurzel 2. Eine Überlagerung der Umfangsgeschwindigkeit des Tragschrauberrotorblatts 1 und eines Fahrtwindes ergibt die Strömungsgeschwindigkeit der Luft an das Tragschrauberrotorblatt 1. Beispielsweise ist bei dem nach vorne laufenden Tragschrauberrotorblatt 1 die Strömungsgeschwindigkeit nach außen hin größer.

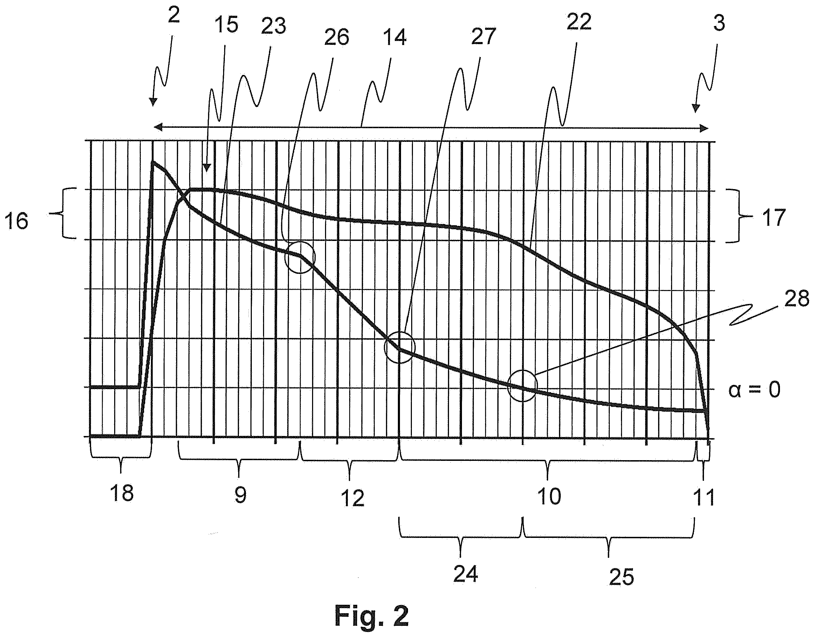

Ferner weist das Tragschrauberrotorblatt 1 eine Vorderkante 4, die bei dem Flugbetrieb des Tragschraubers vorweg läuft, sowie eine Hinterkante 5 auf, die bei dem Flugbetrieb des Tragschraubers hinterher läuft. Die Vorderkante 4 und die Hinterkante 5 umranden das Tragschrauberrotorblatt 1, so dass deren Umrandung einen Grundriss des Tragschrauberrotorblatts 1 (vgl. Figur 2) bilden.

Ein Schnitt, insbesondere ein 90° Schnitt, quer zur Längsrichtung bezeichnet ein Profil 21a-f des Tragschrauberrotorblatts 1. Die jeweiligen Profile 21a-f können sich über die Längsrichtung des Tragschrauberrotorblatts 1 ändern, so dass sich die jeweiligen Profile 21a-f unterscheiden. Außerdem können sich die Profile 21a-f beispielsweise kontinuierlich verändern, wobei beispielsweise das erste Profil 21c kontinuierlich und stetig in das dritte Profil 21d übergeht. Des Weiteren kann das Tragschrauberrotorblatt 1 auch deutlich mehr unterschiedliche Profile 21 aufweisen. Beispielsweise kann das Tragschrauberrotorblatt 1 zwischen dem ersten Profil 21c und dem dritten Profil 21d ein weiteres, insbesondere unterschiedliches, Profil 21 aufweisen.

Die Profile 21a-f in den verschiedenen Bereichen des Tragschrauberrotorblatts 1 bestimmen dabei die Eigenschaften des Tragschrauberrotorblatts 1, wie z.B. den Auftrieb und den Luftwiderstand.

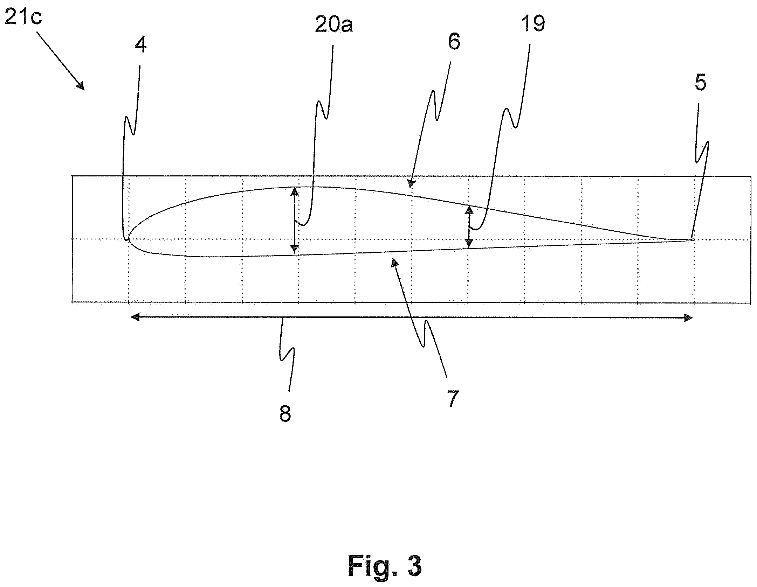

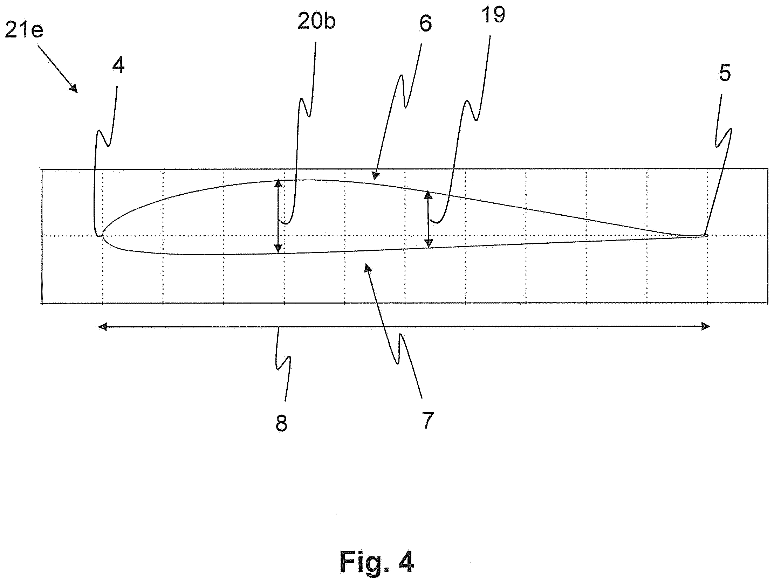

Das erste Profil 21c ist der Querschnitt eines Innenprofilbereichs 9 (vgl. Figur 2 und 3). Das zweite Profil 21e ist der Querschnitt eines Hauptprofilbereichs 10 (vgl. Figur 2 und 4).

Außerdem ist ein Abstand von Vorderkante 4 und Hinterkante 5 als Profiltiefe 8 bezeichnet. Erfindungsgemäß nimmt die Profiltiefe 8 von einem Bereich einer maximalen Profiltiefe 15 in Richtung der Blattspitze 3 monoton ab. Zusätzlich oder alternativ kann die Profiltiefe 8 auch über einen Bereich des Tragschrauberrotorblatts 1 gleichbleibend ausgebildet sein. Auch die Profiltiefe 8 kann Einfluss auf die Eigenschaften des Tragschrauberrotorblatts 1 haben. Beispielsweise bewirkt ein entsprechender Profiltiefenverlauf ein günstigeres Abwindfeld, was schlussendlich einen geringeren Widerstand des Tragschrauberrotors bewirkt.

Mit einem sich nach außen verjüngenden Tragschrauberrotorblatt 1 und speziellen Formen der Profile 21a-f kann somit auf die Anforderungen des Tragschraubers eingegangen werden. Wenn der Tragschrauber beispielsweise höhere Lasten transportieren soll, kann der Profiltiefenverlauf mit einem Faktor skaliert werden der z.B. die lokale Profiltiefe vergrößert, so dass ein Auftrieb erhöht wird. Dieser Faktor kann für jeden Bereich des Tragschrauberrotorblattes gleich sein. Zusätzlich oder alternativ könnten die einzelnen Bereiche, beispielsweise der Innenprofil-, Hauptprofil-, Außenprofil-, und/oder der zumindest eine Übergangsprofilbereich, unterschiedliche Faktoren aufweisen. Dabei sind zumindest zwei Faktoren verschieden. Ebenso können Profile 21a-f ausgebildet werden, die einen höheren Auftrieb aufweisen. Soll dagegen der Tragschrauber beispielsweise für sportliche Zwecke verwendet werden, kann der Profiltiefenverlauf mit einem Faktor reduziert werden der z.B. die lokale Profiltiefe verringert, so dass der Profiltiefenverlauf ideal an jeden Tragschrauberrotorradius angepasst werden kann und so der Luftwiderstand verringert wird und dadurch eine höhere Fluggeschwindigkeit mit dem Tragschrauber erreicht werden kann. Somit kann die Flugleistung des Tragschrauberrotorblatts 1 insgesamt erhöht und auf die Anforderungen des Tragschraubers angepasst werden.

Ein Abstand quer zur Längsrichtung, insbesondere 90° zur Längsrichtung, des Tragschrauberrotorblatts 1 zwischen der Vorderkante 4 und der Hinterkante 5 wird als Profiltiefe 8 bezeichnet. Die Profiltiefe 8 wird von einem Bereich einer maximalen Profiltiefe 15 in Richtung der Blattspitze 3 geringer. Mit einer geringer werdenden Profiltiefe 8 kann ein günstigeres Abwindfeld erzeugt werden, wodurch es zu weniger Verwirbelungen kommt und sich der Luftwiderstand verringert. Mit der Verringerung der Profiltiefe 8 nach außen hin, wird der Luftwiderstand des Tragschrauberrotors verringert, was vorteilhaft für eine Flugleistung des Tragschraubers ist.

Figur 2 zeigt ein Diagramm eines Profiltiefenverlaufs 22 und eines Verwindungsverlaufs 23 eines Tragschrauberrotorblatts 1. Auf der horizontalen oder der Abszissenachse ist die Längsausdehnung 14 des Tragschrauberrotorblatts 1 aufgetragen. Dabei ist die Blattwurzel 2 an der linken Seite und die Blattspitze 3 an der rechten Seite der Abszissenachse angeordnet. Das Tragschrauberrotorblatt 1 erstreckt sich somit in eine positive Koordinatenrichtung von der Blattwurzel 2 zur Blattspitze 3. Auf der Vertikalen oder der Ordinatenachse sind einerseits die Profiltiefe 8 und andererseits die Verwindung des Tragschrauberrotorblatts 1 bzw. der Verwindungswinkel α aufgetragen. Die beiden Graphen geben somit den Profiltiefenverlauf 22 und den Verwindungsverlauf 23 wieder.

Das Tragschrauberrotorblatt 1 ist des Weiteren in verschiedene Profilbereiche 9, 10, 11, 12 aufgeteilt. An der Blattwurzel 2 und/oder zu diesem benachbart ist ein Innenprofilbereich 9 angeordnet. An der Blattspitze 3 und/oder zu diesem benachbart ist ein Außenprofilbereich 11 angeordnet. Zwischen diesen Profilbereichen 9, 11 ist ein Hauptprofilbereich 10 angeordnet. Die drei Profilbereiche 9, 10, 11 können dabei unterschiedliche Profile aufweisen. Ein Profil ist dabei ein Schnitt, insbesondere ein 90° Schnitt, zur Längsrichtung des Tragschrauberrotorblatts 1. Beispielsweise könnte der Innenprofilbereich 9 ein Profil, insbesondere das erste Profil 21c aus Figur 1, gemäß der in der vorangegangenen Beschreibung enthaltenen Tabelle 1 oder gemäß Figur 3 aufweisen. Der Hauptprofilbereich 10 könnte beispielsweise ein Profil, insbesondere das zweite Profil 21e aus Figur 1, gemäß der in der vorangegangenen Beschreibung enthaltenen Tabelle 2 oder gemäß Figur 4 aufweisen.

Außerdem ist zwischen dem Innenprofilbereich 9 und dem Hauptprofilbereich 10 ein Übergangsprofilbereich 12 angeordnet. Zusätzlich kann auch zwischen dem Hauptprofilbereich 10 und dem Außenprofilbereich 11 ein zweiter Übergangsprofilbereich angeordnet sein. Insbesondere weisen der Innenprofil- 9 sowie der Hauptprofilbereich 10 unterschiedliche Profile 21c, 21e auf. Mittels des Übergangsprofilbereichs 12 kann ein Übergang zwischen den verschiedenen Profilen ausgebildet werden.

Eine Verwindung ist bei dem Tragschrauberrotorblatt 1 eine Verdrehung dessen um eine Achse in Längsrichtung. Die Vorderkante 4 und die Hinterkante 5 (vgl. Figur 1) beschreiben bei einer Verwindung eine Schraubenlinie um die Achse in Längsrichtung. Insbesondere ist von der Blattwurzel 2 bis zur Blattspitze 3 die Vorderkante 4 in Richtung Überdruckseite 7 und die Hinterkante 5 in Richtung Unterdruckseite 6 verdreht (für Überdruckseite 7 und Unterdruckseite 6 vgl. Figur 3, 4). Bei einem normalen Flugbetrieb des Tragschraubers weist das Tragschrauberrotorblatt 1 deshalb an der Blattwurzel 2 einen größeren Winkel zu einer Umlaufebene des Tragschrauberrotors als an der Blattspitze 3 auf. Dieser höhere Winkel an der Blattwurzel 2 spiegelt sich auch dadurch wieder, dass die Vorderkante 4 einen größeren Abstand zu dieser Umlaufebene als die Hinterkante 5 aufweist. An der Blattspitze 3 ist dieser Unterschied der Abstände der Vorderkante 4 bzw. der Hinterkante 5 zur Umlaufebene durch die Verwindung geringer. Dies führt zu einem geringeren Luftwiderstand des Tragschrauberrotorblatts 1.

Des Weiteren könnte beispielsweise ein Abschnitt auf der linken Ordinatenachse 16, welche die Profiltiefe 8 des Tragschrauberrotorblatts 1 anzeigt, 20% der maximalen Profiltiefe betragen. Somit würde sich die linke Ordinatenachse über 120% (von 0% bis 120%) erstrecken. Ein Abschnitt der rechten Ordinatenachse 17, welche die Verwindung anzeigt, könnte beispielsweise 1° betragen. Außerdem könnte die rechte Ordinatenachse von -1° bis 5° reichen. Ein Abschnitt auf der Abszissenachse 18 könnte 10% der Längsausdehnung 14 betragen, somit erstreckt sich das Tragschrauberrotorblatt 1 von 0% bis 100% der Längsausdehnung 14, es ist somit auf die Längsausdehnung 14 normiert.

Zu beachten ist hier, dass der Bereich vor dem Innenprofilbereich 9 von 0% bis 16 % zwar noch zum Tragschrauberrotorblatt 1 gehört, hier jedoch beispielsweise die Befestigungsmittel angeordnet sind und einen Übergang zum Innenprofilbereich bilden. Deswegen weisen der Profiltiefenverlauf 22 und der Verwindungsverlauf 23 einen gleichbleibenden Wert auf, und steigen beim Übergang zum Innenprofilbereich 9 rapide an. Dieser Bereich soll aber bei einer Betrachtung der Funktion des Tragschrauberrotorblatts 1 ausgenommen sein. Die Längsausdehnung 14 und die Betrachtung der Funktion des Tragschrauberblatts 1 beginnen deshalb erst bei 16% und enden bei 100%.

Ferner ist das Tragschrauberrotorblatt 1 in verschiedene Profilbereiche 9, 10, 11, 12 eingeteilt. An der Blattwurzel 2 und/oder zu dieser benachbart ist der Innenprofilbereich 9 angeordnet. Daran anschließend ist der Übergangsprofilbereich 12 angeordnet. Wieder daran anschließend ist der Hauptprofilbereich 10 angeordnet. Abschließend weist das Tragschrauberrotorblatt 1 den Außenprofilbereich 11 auf. Zusätzlich oder alternativ kann zwischen dem Hauptprofilbereich 10 und dem Außenprofilbereich 11 ein zweiter Übergangsprofilbereich angeordnet sein.

Der Innenprofilbereich 9 erstreckt sich in diesem Ausführungsbeispiel über einen Bereich von 16% bis zu 34% der Längsausdehnung des Tragschrauberrotorblatts 1. Die Profiltiefe 8 kann beispielsweise anhand des Profiltiefenverlaufs 22 für den Innenprofilbereich 9 abgelesen werden, und weist beispielsweise Werte von ca. 100% bis 90% der maximalen Profiltiefe auf. Der Abstand zwischen Vorderkante 4 und Hinterkante 5 beträgt somit in diesem Bereich diese Werte der maximalen Profiltiefe. Der Profiltiefenverlauf 22 nimmt ab einem Bereich der maximalen Profiltiefe 15 des Tragschrauberrotorblatts 1 monoton ab. Zusätzlich oder alternativ kann der Profiltiefenverlauf 22 auch über einen Bereich der Längsausdehnung 14 gleichbleibend ausgebildet sein. Ein Verwindungsverlauf 23 nimmt in diesem Innenprofilbereich 9 ebenfalls monoton ab. Die Verwindung beträgt dabei in diesem Bereich zwischen etwa 4,5° und 2,8°, wie es anhand des Verwindungsverlaufs 23 abgelesen werden kann. In einem Abschnitt, von ca. 16% bis 34% der Längsausdehnung 14, ist der Verwindungsverlauf 23 konkav, beispielsweise parabolisch und/oder exponentiell fallend, ausgebildet.

Ab 35% bis 50% der Längsausdehnung 14 kann sich beispielsweise der Übergangsprofilbereich 12 erstrecken. Der Profiltiefenverlauf 22 ist hier annähernd gleichbleibend ausgebildet. Der Verwindungsverlauf 23 sinkt linear bzw. weist eine konstante (negative) Steigung auf. Beispielsweise verringert sich ein Verwindungswinkel α von 2,8° auf 0,8°.

Von 50% bis 96% der Längsausdehnung 14 des Tragschrauberrotorblatts 1 erstreckt sich beispielsweise der Hauptprofilbereich 10. In diesem Bereich sinkt der Profiltiefenverlauf 22 monoton weiter. In einem ersten Abschnitt dieses Bereichs, von ungefähr 50% bis 64% der Längsausdehnung 14, sinkt der Profiltiefenverlauf 22 nur leicht von beispielsweise 87% auf 82%. Ab 64% bis 96% sinkt der Profiltiefenverlauf 22 stärker ab, von einem Wert von beispielsweise 82% auf 42%.

Der Grundriss des Tragschrauberrotorblatts 1 nimmt von der Blattwurzel 2 zur Blattspitze 3 von einer maximalen Profiltiefe 15 monoton ab und hat an den aufgelisteten Radiuspositionen die in der folgenden Tabelle 3 aufgelisteten Profiltiefen. Die maximale Profiltiefe 15 ist dabei auf 100% normiert. Alle anderen in der Tabelle 3 aufgelisteten Werte beziehen sich auf diese maximale Profiltiefe. Die Profiltiefe 8 nimmt von einer maximalen Profiltiefe ausgehend in Richtung der Blattspitze 3 ab, sodass beispielsweise bei 60% des Radius' die Profiltiefe 8 noch 85% der maximalen Profiltiefe beträgt. Zwischen den Radiuspositionen hat der Grundriss gleichmäßige Übergänge und/oder verläuft geschwungen. Die Profiltiefe 8 kann zudem mit einem Faktor von 0,8 bis 1,2 skaliert werden um den Grundriss für die jeweiligen Entwurfsziele ideal anzupassen:

**Tabelle 3**

| Radius | Profiltiefe von | Profiltiefe bis | % der max Tiefe |
|---|---|---|---|
| 20% | 80% | 120% | **100%** |
| 30% | 75,8% | 113% | **94,5%** |
| 50% | 69,6% | 104% | **87,0%** |
| 60% | 67,9% | 102% | **85,0%** |
| 70% | 62,1% | 92,8% | **77,5%** |
| 90% | 43,0% | 64,2% | **53,6%** |

Der Verwindungsverlauf 23 sinkt in dem Hauptprofilbereich 10 ebenfalls ab. Der Wert des Verwindungsverlaufs 23 verringert sich beispielsweise von 0,8° auf -0,5° und weist z.B. einen parabolisch, polynomisch und/oder einen exponentiell fallenden Verlauf auf.

Des Weiteren weist der Hauptprofilbereich 10 wurzelseitig einen ersten Teilbereich 24 auf, in dem der Verwindungsverlauf 23 positive Werte, insbesondere positive Verwindungswinkel a, aufweist. Zusätzlich weist der Hauptprofilbereich 10 spitzenseitig einen zweiten Teilbereich 25 auf, in dem der Verwindungsverlauf 23 negative Werte, insbesondere negative Verwindungswinkel a, aufweist. Zwischen dem ersten Teilbereich 24 und dem zweiten Teilbereich 25 findet ein Vorzeichenwechsel 28 des Verwindungsverlaufs 23 statt, der bei ca. 70% der Längsrichtung des Tragschrauberrotorblatts 1 angeordnet ist. Bei einem Anstellwinkel von Null Grad ist das Profil an der Stelle des Vorzeichenwechsels 28 parallel mit der Drehebene des rotierenden Tragschrauberrotorblatts 1 angeordnet. Im ersten Teilbereich 24 wird der lokale geometrische Anstellwinkel durch die Verwindung vergrößert. In dem zweiten Teilbereich 25 wird der geometrische Anstellwinkel dagegen verkleinert. Diese Veränderungen im geometrischen Anstellwinkel bewirken eine günstigere Abwindverteilung, sodass weniger Verwirbelungen im Nachlauf entstehen, wodurch der Tragschrauberrotor leichter autorotiert, was einen geringeren Widerstand des Tragschrauberrotors nach sich zieht.

Zwischen 96% und 100% der Längsausdehnung 14 des Tragschrauberrotorblatts 1 kann der Außenprofilbereich 11 angeordnet sein, welcher das Tragschrauberrotorblatt 1 abschließt. Hier sinkt der Profiltiefenverlauf 22 parabolisch, konvex, polynomisch und/oder nichtlinear von 42% und geht gegen Null. Der Verwindungsverlauf 23 bleibt in diesem Bereich im Wesentlichen konstant.

Ein Tragschrauberrotorblatt 1 mit einem derartigen Profiltiefenverlauf 22 und Verwindungsverlauf 23 kann dabei auf spezielle Fluganforderungen eingestellt sein. Beispielsweise kann ein derartiges Tragschrauberrotorblatt 1 eine hohe Fluggeschwindigkeit des Tragschraubers zulassen, da ein Luftwiderstand besonders gering ist.

Der Profiltiefenverlauf 22 ist im Übergangsprofilbereich 12 und/oder im Hauptprofilbereich 10 als eine geschwungene und/oder monoton fallende Kurve ausgebildet. Der Profiltiefenverlauf 22 kann dabei auch durch eine streng monoton fallende Kurve bestimmt sein.

Außerdem weist der Verwindungsverlauf 23 zwischen dem Innenprofilbereich 9 und dem Übergangsprofilbereich 12 einen ersten Knick 26 und zwischen dem Übergangsprofilbereich 12 und dem Hauptprofilbereich 10 einen zweiten Knick 27 auf.

Ferner ist die Steigung des Verwindungsverlaufs 23 in dem Übergangsprofilbereich 12 mindestens halb so groß wie in dem Innenprofilbereich 9 und/oder dem Hauptprofilbereich 10. Außerdem ist die Gesamtverwindung in dem Übergangsprofilbereich 12 mindestens halb so groß wie die Gesamtverwindung in dem Innenprofilbereich 9 und/oder dem Hauptprofilbereich 10. Als Gesamtverwindung in einem Bereich soll dabei eine Differenz zwischen dem Verwindungsverlauf 23 am Anfang und am Ende eines Bereichs definiert sein. Beispielsweise beträgt die Gesamtverwindung im Übergangsprofilbereich 12 ca. 2,0° (2,8° - 0,8°).

Figur 3 zeigt einen Querschnitt des Profils des Innenprofilbereichs 9 (vgl. Figur 2). Die Figur 3 ist dabei die grafische Darstellung der Tabelle 1 der vorangegangenen Beschreibung. Das Profil des Innprofilbereichs 9 ist von der Vorderkante 4, der Hinterkante 5, einer Unterdruckseite 6 sowie der Überdruckseite 7 begrenzt. Die Unterdruckseite 6 ist stärker als die Überdruckseite 7 gewölbt, so dass die Verdrängungswirkung des Profils eine Beschleunigung des umströmenden Luftstromes bewirkt, wodurch sich gemäß dem Bernoulli-Gesetz eine entsprechende Druckverteilung einstellt. Dies wird auf der Unterdruckseite einen geringeren Druck bewirken als auf der Überdruckseite. Dies führt zu einer Kraft in Richtung der Unterdruckseite 6, welche den Auftrieb erzeugt.

Die Profiltiefe 8 ist in dieser Figur 3 auf 1 normiert, wobei die Vorderkante 4 in dem Koordinatensystem bei 0 und die Hinterkante 5 bei 1 angeordnet sein kann. Die in den Tabellen 1, 2 enthaltenen X/c- sowie Y/c-Werte sind dabei die entsprechenden X- sowie Y-Koordinaten des Koordinatensystems, wobei das c im Nenner für die Profiltiefe 8 steht (um so die Koordinaten zu normieren).

Die Profildicke 19 ist ebenfalls auf die Profiltiefe 8 normiert. Eine relative Profildicke des Tragschrauberrotorblatts 1 ist als das Verhältnis von größter Profildicke 20a und der Profiltiefe 8 definiert. Beispielsweise ist die relative Profildicke des Innenprofilbereichs 9 bei einer relativen Dickenrücklage zwischen 25% und 35% und beträgt zwischen 11% und 15%, vorzugsweise 13,5%. Die relative Dickenrücklage ist dabei das Verhältnis des Abstandes der größten Profildicke 20a von der Vorderkante 4 und der Profiltiefe 8. Die relative Dicke 20a ist in diesem Ausführungsbeispiel bei 29,2 % angeordnet.

Außerdem weist das Profil des Innenprofilbereichs 9 eine maximale Wölbung zwischen 3% und 4%, insbesondere zwischen 3,6% und 3,8%, bei einer Wölbungsrücklage zwischen 30% und 40%, insbesondere 35,3%, auf. Die maximale Wölbung ist dabei das Verhältnis des größten Abstands zwischen Profilsehne und Skelettlinie. Die Profilsehne ist die Verbindungslinie zwischen Vorderkante 4 und Hinterkante 5. Die Skelettlinie liegt mittig zwischen der Unterdruckseite 6 und der Überdruckseite 7.

Wenn das Tragschrauberrotorblatt 1 beispielsweise eine höhere Profildicke 19 aufweist, ist der Auftrieb erhöht. Mit einem derartigen Profil kann beispielsweise eine höhere Last mit dem Tragschrauber transportiert werden.

Wenn dagegen die Profildicke 19 geringer ist, wird der Luftwiderstand des Tragschrauberrotorblatts 1 verringert. Dann kann mit dem Tragschrauber beispielsweise eine höhere Fluggeschwindigkeit und/oder eine höhere Reichweite erreicht werden, so dass der Tragschrauber für sportliche Zwecke genutzt werden kann.

Figur 4 zeigt einen Querschnitt des Profils des Hauptprofilbereichs 10. Die Figur 4 ist dabei die grafische Darstellung der Tabelle 2 der vorangegangenen Beschreibung. Hier soll außerdem lediglich auf die Unterschiede zur vorangegangenen Figur 3 eingegangen werden. Das Profil des Hauptprofilbereichs 10 weist eine relative Profildicke zwischen 10% und 14%, vorzugsweise 12,1%, mit einer relativen Dickenrücklage zwischen 26% und 36%, vorzugsweise von 29,2%, auf. Das Profil weist eine größte Profildicke 20b auf. Außerdem weist das Profil des Hauptprofilbereichs 10 eine maximale Wölbung zwischen 3% und 4%, insbesondere zwischen 3,2 % und 3,4%, mit einer relativen Wölbungsrücklage zwischen 30% und 40%, vorzugsweise bei 36,8%, auf.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Tragschrauberrotorblatt
- 2: Blattwurzel
- 3: Blattspitze
- 4: Vorderkante
- 5: Hinterkante
- 6: Unterdruckseite
- 7: Überdruckseite
- 8: Profiltiefe
- 9: Innenprofilbereich
- 10: Hauptprofilbereich
- 11: Außenprofilbereich
- 12: erster Übergangsprofilbereich
- 14: Längsausdehnung
- 15: Bereich maximaler Profiltiefe
- 16: Abschnitt der linken Ordinatenachse
- 17: Abschnitt der rechten Ordinatenachse
- 18: Abschnitt der Abszissenachse
- 19: Profildicke
- 20: größte Profildicke
- 21a: Profil
- 21b: Profil
- 21c: erstes Profil
- 21d: drittes Profil
- 21e: zweites Profil
- 21f: Profil
- 22: Profiltiefenverlauf
- 23: Verwindungsverlauf
- 24: erster Teilbereich
- 25: zweiter Teilbereich
- 26: erster Knick
- 27: zweiter Knick
- 28: Vorzeichenwechsel

- α: Verwindungswinkel

## Patentansprüche

1. Tragschrauberrotorblatt zur autorotatorischen Auftriebserzeugung mit einem wurzelseitigen Innenprofilbereich (9), der ein erstes Profil (21c) aufweist, mit einem spitzenseitigen Hauptprofilbereich (10), der ein zum ersten Profil (21c) unterschiedliches zweites Profil (21e) aufweist, und mit einem sich in Längsrichtung des Tragschrauberrotorblatts (1) vom Bereich der Blattwurzel (2) ausgehend in Richtung der Blattspitze (3) monoton abnehmenden Profiltiefenverlauf (22), **dadurch gekennzeichnet, dass** das Tragschrauberrotorblatt (1) eine Verwindung mit einem sich vom Bereich der Blattwurzel (2) ausgehend in Richtung der Blattspitze (3) monoton abnehmenden Verwindungsverlauf (23) aufweist, dass der Verwindungsverlauf (23) im Innenprofilbereich (9) und Hauptprofilbereich (10) eine variable Steigung aufweist, so dass der Verwindungsverlauf (23) in diesen Bereichen (9, 10) konkav gekrümmt ist, dass das Tragschrauberrotorblatt (1) einen Übergangsprofilbereich (12) aufweist, der zwischen dem Innenprofilbereich (9) und dem Hauptprofilbereich (10) angeordnet ist und der ein drittes Profil (21d) aufweist, dessen Profilgeometrie sich kontinuierlich radial nach außen vom ersten Profil (21c) zum zweiten Profil (21e) verändert und dass der Verwindungsverlauf (23) im Übergangsprofilbereich (12) eine konstante Steigung aufweist, so dass der Verwindungsverlauf (23), insbesondere über den gesamten Übergangsprofilbereich (12), geradlinig ist.

2. Tragschrauberrotorblatt nach einem oder mehreren der vorherigen Ansprüche, **dadurch gekennzeichnet, dass** die Steigung des Verwindungsverlaufs (23) und/oder die Gesamtverwindung des Übergangsprofilbereichs (12) mindestens halb so groß ist als die maximale Steigung und/oder Gesamtverwindung des Innenprofilbereichs (9) und/oder Hauptprofilbereichs (10).

3. Tragschrauberrotorblatt nach einem oder mehreren der vorherigen Ansprüche, **dadurch gekennzeichnet, dass** der Verwindungsverlauf (23) im gesamten Innenprofilbereich (9) und/oder Übergangsbereich (12) einen positiven Verwindungswinkel (a) aufweist.

4. Tragschrauberrotorblatt nach einem oder mehreren der vorherigen Ansprüche, **dadurch gekennzeichnet, dass** der Verwindungsverlauf (23) in einem wurzelseitigen ersten Teilbereich (24) des Hauptprofilbereichs (10) einen positiven Verwindungswinkel (a) und in einem spitzenseitigen zweiten Teilbereich (25) des Hauptprofilbereichs (10) einen negativen Verwindungswinkel (a) aufweist und/oder dass der Verwindungswinkel (a) zwischen dem ersten Teilbereich (24) und zweiten Teilbereich (25) Null beträgt.

5. Tragschrauberrotorblatt nach einem oder mehreren der vorherigen Ansprüche, **dadurch gekennzeichnet, dass** der Verwindungsverlauf (23) beim Übergang vom Innenprofilbereich (9) zum Übergangsprofilbereich (12) einen, insbesondere negativen und/oder konvexen, ersten Knick (26) und/oder beim Übergang vom Übergangsprofilbereich (12) zum Hauptprofilbereich (10) einen, insbesondere positiven und/oder konkaven, zweiten Knick (27) aufweist.

6. Tragschrauberrotorblatt nach einem oder mehreren der vorherigen Ansprüche, **dadurch gekennzeichnet, dass** das Tragschrauberrotorblatt (1) im Bereich der Blattspitze (3) einen Außenprofilbereich (11) aufweist, über dessen Länge der Verwindungswinkel vorzugsweise konstant ist.

7. Tragschrauberrotorblatt nach einem oder mehreren der vorherigen Ansprüche, **dadurch gekennzeichnet, dass** der Profiltiefenverlauf (22) als geschwungene und/oder, insbesondere im Übergangsprofilbereich (12) und/oder Hauptprofilbereich (10), streng monoton fallende Kurve ausgebildet ist.

8. Tragschrauberrotorblatt nach einem oder mehreren der vorherigen Ansprüche, **dadurch gekennzeichnet, dass** der Innenprofilbereich (9) eine relative Profildicke zwischen 11% und 15%, vorzugsweise 13,5%, mit einer relativen Dickenrücklage zwischen 25% und 35%, vorzugsweise bei 29,2%, aufweist.

9. Tragschrauberrotorblatt nach einem oder mehreren der vorherigen Ansprüche, **dadurch gekennzeichnet, dass** der Hauptprofilbereich (10) eine relative Profildicke zwischen 10% und 14%, vorzugsweise 12%, mit einer relativen Dickenrücklage zwischen 26% und 36%, vorzugsweise bei 31,1%, aufweist.

10. Tragschrauberrotorblatt nach einem oder mehreren der vorherigen Ansprüche, **dadurch gekennzeichnet, dass** der Innenprofilbereich (9) eine maximale Wölbung zwischen 3% und 4%, insbesondere zwischen 3,6% und 3,8%, mit einer relativen Wölbungsrücklage zwischen 30% und 40%, vorzugsweise bei 35,3%, aufweist.

11. Tragschrauberrotorblatt nach einem oder mehreren der vorherigen Ansprüche, **dadurch gekennzeichnet, dass** der Hauptprofilbereich (10) eine maximale Wölbung zwischen 3% und 4%, insbesondere zwischen 3,2% und 3,4%, mit einer relativen Wölbungsrücklage zwischen 30% und 40%, vorzugsweise bei 36,8%, aufweist.

12. Tragschrauberrotorblatt nach einem oder mehreren der vorherigen Ansprüche, **dadurch gekennzeichnet, dass** das erste Profil (21c) des Innenprofilbereichs (9) nach folgender Tabelle 1
**Tabelle 1**
| X/c | Y/c |
|---|---|
| 0.9999143 | 0.0013778 |
| 0.9096047 | 0.0057740 |
| 0.8094283 | 0.0215009 |
| 0.7018852 | 0.0380422 |
| 0.5942588 | 0.0547910 |
| 0.5069711 | 0.0676497 |
| 0.4086232 | 0.0790094 |
| 0.3009582 | 0.0828136 |
| 0.1957930 | 0.0751251 |
| 0.1002021 | 0.0572140 |
| 0.0000021 | -0.0001393 |
| 0.0993147 | -0.0268982 |
| 0.2099724 | -0.0272236 |
| 0.2992137 | -0.0251922 |
| 0.4082850 | -0.0217272 |
| 0.4999015 | -0.0184438 |
| 0.5916794 | -0.0151009 |
| 0.7018578 | -0.0112716 |
| 0.7933965 | -0.0082416 |
| 0.9019589 | -0.0051074 |
| 1.0000250 | -0.0013522 |
ausgebildet ist, wobei die X/c- und die Y/c-Koordinaten auf die Profiltiefe (8) normiert sind, der Koordinatenursprung an der Vorderkante (4) ist und die Werte in der Tabelle von oben nach den Profilverlauf von der Hinterkante (5) ausgehend, über die Unterdruckseite (6) zur Vorderkante (4) und über die Überdruckseite (7) wieder zurück zur Hinterkante (5) beschrieben.

13. Tragschrauberrotorblatt nach einem oder mehreren der vorherigen Ansprüche, **dadurch gekennzeichnet, dass** das zweite Profil (21e) des Hauptprofilbereichs (10) nach folgender Tabelle 2
**Tabelle 2**
| X/c | Y/c |
|---|---|
| 0.9999143 | 0.0015200 |
| 0.9084306 | 0.0066846 |
| 0.7988078 | 0.0244418 |
| 0.7023305 | 0.0398598 |
| 0.6058425 | 0.0553892 |
| 0.4954016 | 0.0718163 |
| 0.4047419 | 0.0813044 |
| 0.3017767 | 0.0832083 |
| 0.1994129 | 0.0743986 |
| 0.1020109 | 0.0551867 |
| 0.0000031 | -0.0001814 |
| 0.0957733 | -0.0261818 |
| 0.2031406 | -0.0278629 |
| 0.2994944 | -0.0263669 |
| 0.3968387 | -0.0235516 |
| 0.4948608 | -0.0200729 |
| 0.6096461 | -0.0157994 |
| 0.7080685 | -0.0121285 |
| 0.8063514 | -0.0085282 |
| 0.9045046 | -0.0051214 |
| 1.0000250 | -0.0014784 |
ausgebildet ist, wobei die X/c- und die Y/c-Werte auf die Profiltiefe (8) normiert sind, der Koordinatenursprung an der Vorderkante (4) ist und die Werte in der Tabelle von oben nach unten den Profilverlauf von der Hinterkante (5) ausgehend, über die Unterdruckseite (6) zur Vorderkante (4) und über die Überdruckseite (7) wieder zurück zur Hinterkante (5) beschrieben.

## Claims

1. An autogyro rotor blade for generating lift by autorotation comprising a root-side inner profile region (9), which has a first profile (21c), with a tip-side main profile region (10), which has a second profile (21e) different from the first profile (21c), and with a profile depth curve (22), which decreases monotonically in the longitudinal direction of the autogyro rotor blade (1) from the region of the blade root (2) in the direction of the blade tip (3), **characterized in that** the autogyro rotor blade (1) has a twist having a twist curve (23), which decreases monotonically from the region of the blade root (2) in the direction of the blade tip (3), that the twist curve (23) has a variable slope in the inner profile region (9) and main profile region (10), and therefore the twist curve (23) is concavely curved in this region (9, 10), that the autogyro rotor blade (1) has a transition profile region (12), which is situated between the inner profile region (9) and the main profile region (10), and a third profile (21d), the profile geometry of which changes continuously radially outwardly from the first profile (21c) to the second profile (21e) and that the twist curve (23) has a constant slope in the transition profile region (12), and therefore the twist curve (23) is straight, in particular across the entire transition profile region (12).

2. The autogyro rotor blade as claimed in one or more of the preceding claims, **characterized in that** the slope the twist curve (23) and/or the overall twist of the transition profile region (12) is at least half as great as the maximum slope and/or overall twist of the inner profile region (9) and/or main profile region (10).

3. The autogyro rotor blade as claimed in one or more of the preceding claims, **characterized in that** the twist curve (23) has a positive twist angle (α) in the entire inner profile region (9) and/or transition region (12).

4. The autogyro rotor blade as claimed in one or more of the preceding claims, **characterized in that** the twist curve (23) has a positive twist angle (α) in a root-side first subregion (24) of the main profile region (10) and a negative twist angle (α) in a tip-side second subregion (25) of the main profile region (10) and/or that the twist angle (α) between the first subregion (24) and the second subregion (25) is zero.

5. The autogyro rotor blade as claimed in one or more of the preceding claims, **characterized in that** the twist curve (23) comprises a, in particular negative and/or convex, first sharp bend (26) at the transition from the inner profile region (9) to the transition profile region (12) and/or a, in particular positive and/or concave, second sharp bend (27) at the transition from the transition profile region (12) to the main profile region (10).

6. The autogyro rotor blade as claimed in one or more of the preceding claims, **characterized in that** the autogyro rotor blade (1) has an outer profile region (11) in the region of the blade tip (3), across the length of which the twist angle is preferably constant.

7. The autogyro rotor blade as claimed in one or more of the preceding claims, **characterized in that** the profile depth curve (22) is designed as a sweeping and/or, in particular in the transition profile region (12) and/or main profile region (10), a strictly monotonically decreasing curve.

8. The autogyro rotor blade as claimed in one or more of the preceding claims, **characterized in that** the inner profile region (9) has a relative profile thickness between 11% and 15%, preferably 13.5%, with a relative thickness setback between 25% and 35%, preferably at 29.2%.

9. The autogyro rotor blade as claimed in one or more of the preceding claims, **characterized in that** the main profile region (10) has a relative profile thickness between 10% and 14%, preferably 12%, with a relative thickness setback between 26% and 36%, preferably at 31.1%.

10. The autogyro rotor blade as claimed in one or more of the preceding claims, **characterized in that** the inner profile region (9) has a maximum curvature between 3% and 4%, in particular between 3.6% and 3.8%, with a relative curvature setback between 30% and 40%, preferably at 35.3%.

11. The autogyro rotor blade as claimed in one or more of the preceding claims, **characterized in that** the main profile region (10) has a maximum curvature between 3% and 4%, in particular between 3.2% and 3.4%, with a relative curvature setback between 30% and 40%, preferably at 36.8%.

12. The autogyro rotor blade as claimed in one or more of the preceding claims, **characterized in that** the first profile (21c) of the inner profile region (9) is designed according to the following table 1,
**Table 1**
| X/c | Y/c |
|---|---|
| 0.9999143 | 0.0013778 |
| 0.9096047 | 0.0057740 |
| 0.8094283 | 0.0215009 |
| 0.7018852 | 0.0380422 |
| 0.5942588 | 0.0547910 |
| 0.5069711 | 0.0676497 |
| 0.4086232 | 0.0790094 |
| 0.3009582 | 0.0828136 |
| 0.1957930 | 0.0751251 |
| 0.1002021 | 0.0572140 |
| 0.0000021 | -0.0001393 |
| 0.0993147 | -0.0268982 |
| 0.2099724 | -0.0272236 |
| 0.2992137 | -0.0251922 |
| 0.4082850 | -0.0217272 |
| 0.4999015 | -0.0184438 |
| 0.5916794 | -0.0151009 |
| 0.7018578 | -0.0112716 |
| 0.7933965 | -0.0082416 |
| 0.9019589 | -0.0051074 |
| 1.0000250 | -0.0013522 |
wherein the X/c coordinates and the Y/c coordinates are normalized to the profile depth (8), the coordinate origin is at the leading edge (4), and the values in the table describe, from top to bottom the profile curve originating from the trailing edge (5), across the low pressure side (6) to the leading edge (4), and across the high pressure side (7) back to the trailing edge (5).

13. The autogyro rotor blade as claimed in one or more of the preceding claims, **characterized in that** the second profile (21e) of the main profile region (10) is designed according to the following table 2,
**Table 2**
| X/c | Y/c |
|---|---|
| 0.9999143 | 0.0015200 |
| 0.9084306 | 0.0066846 |
| 0.7988078 | 0.0244418 |
| 0.7023305 | 0.0398598 |
| 0.6058425 | 0.0553892 |
| 0.4954016 | 0.0718163 |
| 0.4047419 | 0.0813044 |
| 0.3017767 | 0.0832083 |
| 0.1994129 | 0.0743986 |
| 0.1020109 | 0.0551867 |
| 0.0000031 | -0.0001814 |
| 0.0957733 | -0.0261818 |
| 0.2031406 | -0.0278629 |
| 0.2994944 | -0.0263669 |
| 0.3968387 | -0.0235516 |
| 0.4948608 | -0.0200729 |
| 0.6096461 | -0.0157994 |
| 0.7080685 | -0.0121285 |
| 0.8063514 | -0.0085282 |
| 0.9045046 | -0.0051214 |
| 1.0000250 | -0.0014784 |
wherein the X/c coordinates and the Y/c coordinates are normalized to the profile depth (8), the coordinate origin is at the leading edge (4), and the values in the table describe, from top to bottom, the profile curve originating from the trailing edge (5), across the low pressure side (6) to the leading edge (4), and across the high pressure side (7) back to the trailing edge (5).

## Revendications

1. Pale de rotor d'autogyre pour la génération de portance en autorotation, avec une zone de profil intérieur (9) de côté racine, qui présente un premier profil (21c), avec une zone de profil principal (10) de côté pointe, qui présente un second profil (21e) différent du premier profil (21c), et avec une allure (22) de profondeur de profil décroissant de manière monotone dans la direction longitudinale de la pale (1) de rotor d'autogyre à partir de la zone du pied (2) de pale dans la direction de la pointe (3) de pale, **caractérisée en ce que** la pale (1) de rotor d'autogyre présente une torsion avec une allure de torsion (23) décroissant de manière monotone à partir de la zone du pied (2) de pale dans la direction de la pointe (3) de pale, **en ce que** l'allure de torsion (23) présente un pas variable dans la zone de profil intérieur (9) et la zone de profil principal (10), de sorte que l'allure de torsion (23) est incurvée de manière concave dans ces zones (9, 10), **en ce que** la pale (1) de rotor d'autogyre présente une zone de profil de transition (12) qui est disposée entre la zone de profil intérieur (9) et la zone de profil principal (10) et qui présente un troisième profil (21d) dont la géométrie de profil varie continuellement radialement vers l'extérieur du premier profil (21c) au deuxième profil (21e) et en que l'allure de torsion (23) présente un pas constant dans la zone de profil de transition (12), de sorte que l'allure de torsion (23) est rectiligne, en particulier sur toute la zone de profil de transition (12).

2. Pale de rotor d'autogyre selon l'une quelconque ou plusieurs des revendications précédentes, **caractérisée en ce que** le pas de l'allure de torsion (23) et/ou la torsion totale de la zone de profil de transition (12) est au moins la moitié du pas maximum et/ou de la torsion totale de la zone de profil intérieur (9) et/ou de la zone de profil principal (10).

3. Pale de rotor d'autogyre selon l'une quelconque ou plusieurs des revendications précédentes, **caractérisée en ce que** l'allure de torsion (23) présente un angle de torsion (a) positif dans toute la zone de profil intérieur (9) et/ou la zone de transition (12).

4. Pale de rotor d'autogyre selon l'une quelconque ou plusieurs des revendications précédentes, **caractérisée en ce que** l'allure de torsion (23) présente un angle de torsion (a) positif dans une première zone partielle (24) de côté racine de la zone de profil principal (10) et un angle de torsion (a) négatif dans une seconde zone partielle (25) de côté pointe de la zone de profil principal (10) et/ou que l'angle de torsion (a) entre la première zone partielle (24) et la seconde zone partielle (25) est nul.

5. Pale de rotor d'autogyre selon l'une quelconque ou plusieurs des revendications précédentes, **caractérisée en ce que** l'allure de torsion (23) présente un premier coude (26), en particulier négatif et/ou convexe, à la transition de la zone de profil intérieur (9) à la zone de profil de transition (12) et/ou un second coude (27), en particulier positif et/ou concave, à la transition de la zone de profil de transition (12) à la zone de profil principal (10).

6. Pale de rotor d'autogyre selon l'une quelconque ou plusieurs des revendications précédentes, **caractérisée en ce que** la pale (1) de rotor d'autogyre présente une zone de profil extérieur (11) dans la zone de la pointe (3) de pale, sur la longueur de laquelle l'angle de torsion est de préférence constant.

7. Pale de rotor d'autogyre selon l'une quelconque ou plusieurs des revendications précédentes, **caractérisée en ce que** l'allure (22) de profondeur de profil se présente sous la forme d'une courbe courbée et/ou, en particulier dans la zone de profil de transition (12) et/ou la zone de profil principal (10), d'une courbe à décroissance strictement monotone.

8. Pale de rotor d'autogyre selon l'une quelconque ou plusieurs des revendications précédentes, **caractérisée en ce que** la zone de profil intérieur (9) présente une épaisseur de profil relative entre 11 % et 15 %, de préférence de 13,5 %, avec une épaisseur maximale relative entre 25 % et 35 %, de préférence de 29,2 %.

9. Pale de rotor d'autogyre selon l'une quelconque ou plusieurs des revendications précédentes, **caractérisée en ce que** la zone de profil principal (10) présente une épaisseur de profil relative entre 10 % et 14 %, de préférence de 12 %, avec une épaisseur maximale relative entre 26 % et 36 %, de préférence de 31,1 %.

10. Pale de rotor d'autogyre selon l'une quelconque ou plusieurs des revendications précédentes, **caractérisée en ce que** la zone de profil intérieur (9) présente une courbure maximale entre 3 % et 4 %, en particulier entre 3,6 % et 3,8 %, avec une courbure maximale relative entre 30 % et 40 %, de préférence de 35,3 %.

11. Pale de rotor d'autogyre selon l'une quelconque ou plusieurs des revendications précédentes, **caractérisée en ce que** la zone de profil principal (10) présente une courbure maximale entre 3 % et 4 %, en particulier entre 3,2 % et 3,4 %, avec une courbure maximale relative entre 30 % et 40 %, de préférence de 36,8 %.

12. Pale de rotor d'autogyre selon l'une quelconque ou plusieurs des revendications précédentes, **caractérisée en ce que** le premier profil (21c) de la zone de profil intérieur (9) est formé selon le tableau 1 suivant, sachant que les coordonnées X/c et Y/c sont normalisées à la profondeur de profil (8), l'origine des coordonnées est au bord d'attaque (4) et les valeurs du tableau sont décrites du haut vers le bas selon l'allure du profil, à partir du bord arrière (5), via le côté de dépression (6) vers le bord d'attaque (4) et via le côté de surpression (7) à nouveau vers le bord arrière (5).
**Tableau 1**
| **X/c** | **Y/c** |
|---|---|
| 0,9999143 | 0,0013778 |
| 0,9096047 | 0,0057740 |
| 0,8094283 | 0,0215009 |
| 0,7018852 | 0,0380422 |
| 0,5942588 | 0,0547910 |
| 0,5069711 | 0,0676497 |
| 0,4086232 | 0,0790094 |
| 0,3009582 | 0,0828136 |
| 0,1957930 | 0,0751251 |
| 0,1002021 | 0,0572140 |
| 0,0000021 | -0,0001393 |
| 0,0993147 | -0,0268982 |
| 0,2099724 | -0,0272236 |
| 0,2992137 | -0,0251922 |
| 0,4082850 | -0,0217272 |
| 0,4999015 | -0,0184438 |
| 0,5916794 | -0,0151009 |
| 0,7018578 | -0,0112716 |
| 0,7933965 | -0,0082416 |
| 0,9019589 | -0,0051074 |
| 1,0000250 | -0,0013522 |

13. Pale de rotor d'autogyre selon l'une quelconque ou plusieurs des revendications précédentes, **caractérisée en ce que** le second profil (21e) de la zone de profil principal (10) est formé selon le tableau 2 suivant, sachant que les valeurs X/c et Y/c sont normalisées à la profondeur de profil (8), l'origine des coordonnées est au bord d'attaque (4) et les valeurs du tableau sont décrites du haut vers le bas selon l'allure du profil, à partir du bord arrière (5), via le côté de dépression (6) vers le bord d'attaque (4) et via le côté de surpression (7) à nouveau vers le bord arrière (5).
**Tableau 2**
| **X/c** | **Y/c** |
|---|---|
| 0,9999143 | 0,0015200 |
| 0,9084306 | 0,0066846 |
| 0,7988078 | 0,0244418 |
| 0,7023305 | 0,0398598 |
| 0,6058425 | 0,0553892 |
| 0,4954016 | 0,0718163 |
| 0,4047419 | 0,0813044 |
| 0,3017767 | 0,0832083 |
| 0,1994129 | 0,0743986 |
| 0,1020109 | 0,0551867 |
| 0,0000031 | -0,0001814 |
| 0,0957733 | -0,0261818 |
| 0,2031406 | -0,0278629 |
| 0,2994944 | -0,0263669 |
| 0,3968387 | -0,0235516 |
| 0,4948608 | -0,0200729 |
| 0,6096461 | -0,0157994 |
| 0,7080685 | -0,0121285 |
| 0,8063514 | -0,0085282 |
| 0,9045046 | -0,0051214 |
| 1,0000250 | -0,0014784 |
